Europäisches Patentamt

European Patent Office

Office européen des brevets

(19)

(11) Publication number: **0 026 575**
**A1**

(12) **EUROPEAN PATENT APPLICATION**

(21) Application number: **80302898.4**

(22) Date of filing: **21.08.80**

(51) Int. Cl.³: **F 16 K 37/00**

(30) Priority: **28.08.79 GB 7929807**

(43) Date of publication of application:
**08.04.81 Bulletin 81/14**

(84) Designated Contracting States:
**DE FR GB**

(71) Applicant: **ELECTROFABRICATION & ENGINEERING COMPANY LIMITED**
**Gloucester Road West Chirton Industrial Estate**
**North Shields Tyne & Wear, NE29 8RQ(GB)**

(71) Applicant: **FORT VALE ENGINEERING LIMITED**
**Parkfield Works Brunswick Street**
**Nelson Lancashire(GB)**

(72) Inventor: **Falconer, John David**
**1 Heathfield Place Melton Park**
**Gosforth Newcastle upon Tyne(GB)**

(72) Inventor: **Fort, Edward Sagar**
**'Ashcroft' Crowtrees Brow Chatburn**
**Nr. Clitheroe Lancashire(GB)**

(74) Representative: **Gura, Henry Alan et al,**
**MEWBURN ELLIS & CO. 70 & 72 Chancery Lane**
**London WC2A 1AD(GB)**

(54) Pressure relief apparatus including valve and pressure indicator.

(57) Pressure relief apparatus for ensuring that the pressure of fluid in a vessel does not exceed a known maximum value, comprising a bursting disc assembly (10) together with a pressure relief valve means (40), there being a sealed interspace (76) between the assembly (10) and the valve means (40). The apparatus also includes indicator means (56,74) for indicating when the pressure in said interspace (76) reaches a first known minimum value, while said valve means (40) includes secondary relief valve means (54) which permit flow of fluid therethrough from the interspace (76) when the pressure in said interspace (76) reaches a further known value at least equal to said first known value but less than said known maximum value, and primary relief valve means (46) which permit flow of fluid therethrough from the interspace (76) when the disc (12) of the assembly (10) bursts. Preferably the primary and secondary relief valve means (46,54) and the indicator means (56,74) are incorporated in a single valve unit (40).

IMPROVEMENTS IN OR RELATING TO PRESSURE
RELIEF APPARATUS

TECHNICAL FIELD

This invention relates to pressure relief apparatus and in particular to such apparatus for installation on vessels containing fluid under pressure.

BACKGROUND ART

It is now obligatory in some countries for transportable tanks or vessels carrying certain highly-toxic or corrosive fluids to be vented by a relief valve in series with a bursting disc, the side of the bursting disc facing the tank hermetically sealing said tank and the relief valve being mounted to the other side of the bursting disc with an interspace between the bursting disc and the relief valve.

It will be appreciated that incorrect mounting of the bursting disc on the tank or vessel, or alternatively the provision of a corroded or otherwise faulty bursting disc, can result in leakage of fluid under pressure from the vessel around or through the bursting disc into said interspace whereby the pressure in said interspace rises. Bursting discs are non-reclosing devices constructed to operate with predetermined pressure differences thereacross, the normal differential being that between the pressure of the vessel contents and atmospheric pressure. Any increase in the interspace pressure above atmospheric pressure acts as a back-up support on the face of the bursting disc remote from the vessel interior and is additive to the bursting pressure setting of the bursting disc, thereby often resulting in bursting of the disc only at pressures well above the maximum pressure allowable in the associated vessel.

It has been proposed to provide pressure relief apparatus including excess flow valves which allow constant leakage from the interspace between the valve and the bursting disc. However such arrangements can result in toxic gases constantly being released into the atmosphere, which is clearly undesirable.

Further, it is known to monitor the pressure in the interspace between the bursting disc and the relief valve, but the gauges associated with such arrangements are usually located under a cover on the top of the tank making regular inspection of the gauge virtually impossible. Additionally, any pressure gauge reading only indicates that interspace pressure is present and that a potentially dangerous situation exists, without in any way attempting to obviate the problem.

Similarly audible or visual pressure sensing devices which monitor the pressure of the interspace and which are triggered at predetermined values of said pressure are merely more sophisticated means for indicating the existence of pressure.

- 3 -

DISCLOSURE OF THE INVENTION

According to the present invention there is provided pressure relief apparatus for mounting on a vessel containing fluid the pressure of which must not exceed a predetermined maximum value, the apparatus comprising a bursting disc one side of which is to be subjected to the fluid pressure within the vessel whereby said disc bursts when said pressure reaches said predetermined maximum value, and primary relief valve means to the other side of the bursting disc, said bursting disc and primary relief valve means defining between them a sealed interspace, the arrangement being such that, on bursting of said disc, the pressure applied to the primary relief valve means opens said means to permit flow of fluid therethrough, the apparatus further comprising indicator means communicating into the sealed interspace such that, when the pressure in said interspace reaches a first predetermined minimum value, said indicator means are actuated to indicate the existence of said pressure, and secondary relief valve means subject to the pressure in said interspace such that, when the pressure in said interspace reaches a further predetermined value at least equal to said first minimum value but less than said predetermined maximum value, the secondary relief valve means open to permit fluid flow therethrough from the interspace.

- 4 -

Conveniently the primary relief valve means includes a primary disc member adapted to seat on a fixed member on the pressure vessel, said primary disc member being urged into a rest position in sealing contact with said fixed member by resilient means.

In a preferred pressure relief apparatus, the primary relief valve means and the secondary relief valve means are incorporated in a single valve unit, said unit comprising a primary disc member of substantially annular shape the radially outer regions of which are urged by said resilient means into a rest position in sealing contact with said fixed member, and a secondary disc member urged by further resilient means into a rest position in sealing contact with the radially inner regions of the primary disc member to close the aperture in said primary disc member, the application of said further predetermined pressure to the secondary disc member lifting said member, against the bias of said further resilient means, away from the primary dsic member to permit flow of fluid from the interspace through the aperture in the primary disc member.

Preferably the valve unit includes means for limiting the movement of the secondary disc member such that, when a pressure in excess of said further predetermined value is applied to said secondary disc member, the secondary relief valve means are closed to

- 5 -

prevent flow therethrough of fluid from the interspace.

Said means for limiting movement of the secondary disc member conveniently comprise a stop member carried by, to be movable with, the secondary disc member such that, once said movement of the secondary disc member away from the primary disc member exceeds a predetermined value, the stop member engages in, to close the aperture in the primary disc member.

Preferably the valve unit further incorporates the indicator means. In such an arrangement, said indicator means may comprise a piston member mounted on, to be movable with, the secondary disc member, said piston member being slidably mounted within a fixed sleeve in the valve unit and having a free end which, on initial movement of the secondary disc member from its rest position, moves an indicator member from a rest position within the valve unit to a displaced position. It will be appreciated that, in such a case, the first predetermined minimum pressure value and further predetermined pressure value are the same.

The indicator member may comprise an insert in the valve unit which, on said initial movement of the secondary disc member, is bodily displaced from said unit.

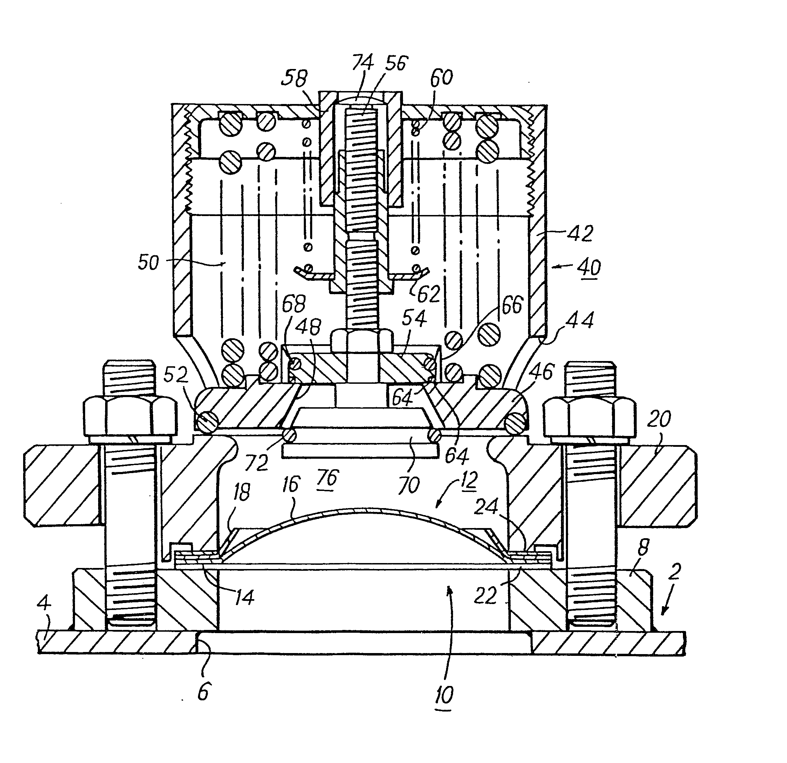

BRIEF DESCRIPTION OF THE DRAWING

The Figure is a vertical section through pressure

- 6 -

relief apparatus according to the invention mounted on a pressure vessel.

BEST MODE OF CARRYING OUT THE INVENTION

Referring to the drawing, a pressure vessel or tank for containing fluid, for example, liquid, under pressure is indicated generally at 2, said tank including a top wall 4 having an aperture 6 therethrough, an annular tank pad 8 being secured to said wall 4 to surround said aperture 6.

The aperture 6 has mounted therein, to be closed by, a bursting disc assembly indicated generally at 10 and including a forward bursting disc 12 consisting of an annular flange portion 14 and a concave-convex dome portion 16 the concave side of which is to be subjected to pressure within the vessel.

A guide ring 18 is located on the disc 12 to the outlet side thereof to facilatate location of the assembly in its operative position between the tank pad 8 and an interconnecting flange member 20. The assembly is completed by a pair of gaskets 22,24 which, on clamping of the assembly in said operative position by means of a series of equally-spaced threaded studs and nuts, ensure a fluid-tight seal with the vessel 2.

Although an assembly incorporating a forward bursting disc has been described and illustrated, it will be appreciated that other types of bursting discs, for example reverse bursting discs which may or may not be used in conjunction with knife blades, could be substituted therefor.

The illustrated pressure relief apparatus further includes a relief valve unit indicated generally at 40 and including a hollow, substantially cylindrical main housing 42 welded to the top side of the interconnecting flange member 20, said housing being provided with a plurality of outlet ports 44 spaced therearound.

A high pressure or primary valve disc member is shown at 46 and is of annular shape including a central, tapering bore 48 therethrough. The disc member 46 is urged by a coil spring 50 into a rest position in which an O-ring 52 carried in the member 46 makes sealing contact with the upper surface of the flange member 20, said member 20 thereby constituting a seat for the disc member 46.

The valve unit 40 further includes a low pressure or secondary valve disc member 54 mounted adjacent one end of, to be movable with, a valve stem 56, the other end of said stem 56 being guided for sliding movement in a fixed sleeve 58 in the housing 42. A further coil spring 60, reacting between the housing and an annular flange 62 fixed on the stem 56, urges the member 54 into a rest position in which a further O-ring 64 carried on the member 54 makes sealing contact with disc member 46 to close the bore 48

- 8 -

therethrough. Movement of the secondary disc member 54 axially of the primary disc member 46 is guided by a collar 66 secured to, to upstand from, the upper surface of said member 46, a sealing ring 68 carried by the member 54 ensuring sealing contact with said collar 66.

The one end of the stem 56 extends through the bore 48 in the disc member 46 and has attached thereto a stop/closure member 70 of tapering shape corresponding with that of the bore 48 for reasons to be detailed below. An O-ring seal 72 surrounds the member 70.

The upper end of the sleeve 58 has formed in the inner wall thereof, just above the other end of the stem 56 with the disc member 54 in its rest position, an annular groove in which is snap-fitted a disc-like indicator button 74 again for reasons to be detailed below.

The pressures required to effect lift of the primary disc member 46 and secondary disc member 54, which lift is against the action of the coil springs 50 and 60, are set in accordance with the maximum permissible working pressure in the associated vessel and in accordance with the critical pressure at which the disc 12 of the associated assembly 10 bursts.

In a typical system, the maximum vessel working pressure is 3.0 $kg/cm^2$ and the critical pressure of the bursting disc 12 is 3.75 $kg/cm^2$. In such a case, the high pressure disc member 46 is arranged to lift at 3.7 kg/cm$^2$ and the low pressure disc member 54 at 0.14 kg/cm$^2$.

Under normal operating conditions, the described pressure relief apparatus functions as follows. When the fluid pressure in the vessel 2 reaches the critical pressure of the disc 12, the dome portion 16 thereof bursts to allow discharge of the contents of the vessel 2 from said vessel through the disc 12. Vessel pressure is thus present in the heretofore sealed interspace 76 between the assembly 10 and the valve disc member 46 and is applied to the undersurfaces of valve disc member 46, the stop/closure member 70 and the valve disc member 54.

The disc member 46, being set to lift at a pressure just below that at which burst occurs, is immediately lifted away from the seat provided by the flange member 20 whereby the vessel contents are released through the outlets 44 to depressurise the system.

The area of the lower surface of the stop/closure member 70 is greater than that of the valve disc member 54 and consequently, on burst, the member 70 is immediately moved upwardly into, to seal, the bore 48 through the disc member 46, thereby preventing flow through the low-pressure part of the valve unit 40 and ensuring that all discharge is by way of raised disc member 46.

The initial upward movement of the member 70 results in corresponding movement of the other end of the stem 56 in the sleeve 58, whereby the indicator button 74 is forcibly ejected from said sleeve 58, indicating that the bursting disc 12 should be replaced.

Under abnormal operating conditions, the described pressure relief apparatus functions as follows. If the bursting disc 12 is leaking due to, for example, faulty installation or corrosion, fluid at up to the maximum vessel working pressure can flow from the vessel into the interspace 76 between the bursting disc 12 and the valve unit 40. The flow rate into the interspace 76 will typically be slow and when the pressure in said space reaches 0.14 $kg/cm^2$, the valve disc member 54, stem 56 and stop/closure member 70 will be lifted to vent said interspace. The movement is not sufficient to bring the stop/closure member 70 into sealing engagement with the bore 48 in the disc member 46.

As the interspace 76 is vented, the pressure therein falls and the disc member 54 returns under the action of the spring 60 towards its rest position seating on the member 46. The result is an oscillating movement of the disc member 54 towards and away from the member 46 such as to retain the interspace pressure at no more than 0.14 $kg/cm^2$ whilst leakage past or

- 11 -

through the bursting disc 12 is occurring and with a minimum of emission of fluid from the system.  The addition of a pressure of 0.14 kg/cm$^2$ to the outlet surface of the dome portion 16 of the bursting disc 12 will not unduly affect the ultimate operation of said disc should total vent be required.

Initial movement of the stem 56 when the interspace pressure first reaches 0.14 kg/cm$^2$ results in ejection of the indicator button 74, again indicating that the bursting disc 12 should be replaced.

Although the illustrated apparatus shows the primary valve disc member and secondary valve disc member, as well as the indicator button, all in the same unit, it would be possible to provide separate high pressure and low pressure valves with the indicator button either mounted in or separate from the low pressure valve.

The indicator means, which may be other than a button, is conveniently such that it cannot readily be reset without removing the unit from the pressure vessel.  Further, a written warning that the means has been actuated may be marked on the apparatus to be visible only after said actuation - for example on the top of the stem 56.

- 12 -

CLAIMS

1.  Pressure relief apparatus for mounting on a
vessel containing fluid the pressure of which must not
exceed a predetermined maximum value, the apparatus
comprising a bursting disc (12) one side of which is
to be subjected to the fluid pressure within the
vessel whereby said disc bursts when said pressure
reaches said predetermined maximum value, and primary
relief valve means (40,46) to the other side of the
bursting disc (12), said bursting disc (12) and primary
relief valve means (40,46) defining between them a
sealed interspace (76), the arrangement being such
that, on bursting of said disc (12), the pressure
applied to the primary relief valve means (40,46) opens
said means to permit flow of fluid therethrough, the
apparatus being characterised by indicator means
(56,74) communicating into the sealed interspace (76)
such that, when the pressure in said interspace (76)
reaches a first predetermined minimum value, said
indicator means (56,74) are actuated to indicate the
existence of said pressure, and secondary relief valve
means (54) subject to the pressure in said interspace
(76) such that, when the pressure in said interspace
reaches a further predetermined value at least equal
to said first minimum value but less than said predetermined maximum value, the secondary relief valve
means (54) open to permit fluid flow therethrough from
the interspace (76).

2.    Pressure relief apparatus as claimed in claim 1 in which the primary relief valve means includes a primary disc member (46) adapted to seat on a fixed member (20) on the pressure vessel (2), said primary disc member (46) being urged into a rest position in sealing contact with said fixed member (20) by resilient means (50).

3.    Pressure relief apparatus as claimed in claim 2 in which the primary relief valve means and the secondary relief valve means are incorporated in a single unit (40), said unit (40) comprising a primary disc member (46) of substantially annular shape the radially outer regions of which are urged by said resilient means (50) into a rest position in sealing contact with said fixed member (20), and a secondary disc member (54) urged by further resilient means (60) into a rest position in sealing contact with the radially inner regions of the primary disc member (46) to close the aperture (48) in said primary disc member (46), the application of said further predetermined pressure to the secondary disc member (54) lifting said member (54), against the bias of said further resilient means (60), away from the primary disc member (46) to permit flow of fluid from the interspace (76) through the aperture (48) in the primary disc member (46).

4.    Pressure relief apparatus as claimed in claim 3 in which the valve unit (40) includes means (70) for limiting the movement of the secondary disc member (54) such that, when a pressure in excess of said further predetermined value is applied to said secondary disc member (54), the secondary relief valve means are closed to prevent flow therethrough of fluid from the interspace (76).

5. Pressure relief apparatus as claimed in claim 4 in which said means for limiting movement of the secondary disc member (54) comprise a stop member (70) carried by, to be movable with, the secondary disc member (54) such that, once said movement of the secondary disc member (54) away from the primary disc member (46) exceeds a predetermined value, the stop member (70) engages in, to close the aperture (48) in the primary disc member (46).

6. Pressure relief apparatus as claimed in any one of claims 3 to 5 in which the valve unit (40) incorporates the indicator means (56,74).

7. Pressure relief apparatus as claimed in claim 6 in which the indicator means comprise a piston member (56) mounted on, to be movable with, the secondary disc member (54), said piston member (56) being slidably mounted within a fixed sleeve (58) in the valve unit (40) and having a free end which, on initial movement of the secondary disc member (54) from its rest position, moves an indicator member (74) from a rest position within the valve unit (40) to a displaced position.

8.  Pressure relief apparatus as claimed in claim 7 in which the indicator member comprises an insert (74) in the valve unit (40) which, on said initial movement of the secondary disc member (54) is bodily displaced from said unit (40).

−1/1−

| Category | Citation of document with indication, where appropriate, of relevant passages | Relevant to claim |
|---|---|---|
| | CH - A - 554 508 (UNITHERM) <br> * Totality * <br> -- | 1-8 |
| | DE - A - 2 161 041 (JOHNSON, MATTHEY & CO) <br> * Pages 1-6; fig. * <br> ---- | 1 |

### DOCUMENTS CONSIDERED TO BE RELEVANT

**CLASSIFICATION OF THE APPLICATION (Int. Cl. ³)**

F 16 K 37/00

**TECHNICAL FIELDS SEARCHED (Int.Cl. ³)**

F 16 K 17/00
F 16 K 7/00
F 16 K 37/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 14-11-1980 | ROUSSARIAN |

EPO Form 1503.1 06.78